# EUROPEAN PATENT APPLICATION

(11) **EP 4 832 176 A1**
(43) Date of publication of application: **28.10.2026**
(21) Application number: 24907024.4
(22) Date of filing: 18.11.2024
(51) Int. Cl.: H01M 10/6566, H01M 10/613, H01M 10/617, H01M 10/643, H01M 10/651, H01M 10/6563, H01M 50/204

(54) **POWER SUPPLY DEVICE**

(30) Priority: 19.12.2023 JP 2023214276
(71) Applicant: Panasonic Intellectual Property Management Co., Ltd., Kadoma-shi, Osaka 571-0057 (JP)
(72) Inventor: MIURA, Takumu, Kadoma-shi, Osaka 571-0057 (JP)
(74) Representative: Novagraaf International SA
(86) International application number: PCT/JP2024/040811
(87) International publication number: WO 2025/134636

(57) **Abstract**

In a power supply device, core packs each accommodating battery cells therein are removably accommodated in an outer case at an insertion position. In each core pack, a cooling end surface of each battery cell is thermally coupled to a first surface of a core pack case, and an electrode end surface is disposed on a second surface of the core pack case. First and second cooling ducts for cooling the core pack are provided in the outer case. The battery cells are cooled by the first cooling duct via the first surface of the core pack case. A latch mechanism is configured to latch the core pack at the insertion position on the outer case. A part of the latch mechanism is a turbulator for cooling air in the second cooling duct. A cooling mechanism is configured to blow the cooling air to the first and second cooling ducts to cool the battery cells.

## Description

### TECHNICAL FIELD

The present disclosure relates to a power supply device including core packs removably accommodated in an outer case.

### BACKGROUND ART

To power electric apparatuses with rechargeable secondary batteries, such as lithium-ion secondary batteries, a power supply device that accommodates a battery core pack accommodating battery cells in an outer case is used in a variety of fields including power storage applications (e.g., PTL 1).

The above power supply device has a structure that allows the battery core pack to be removably accommodated in the outer case. This structure has a mechanism to hold the battery core pack inserted into the outer case in a fixed position. For example, a latch mechanism is employed in which a protrusion provided on a side surface of the core pack is locked into a hole provided in the outer case.

On the other hand, the power supply device employs forced cooling by a fan to cool the battery cells built in the core pack. In this structure, a cooling duct for forcibly bowing air by the fan is provided between the core pack and the outer case, to efficiently release heat generated from the battery cells.

The power supply device in which the core pack is removably placed in the outer case has the latch mechanism to place the core pack in an insertion position. The latch mechanism includes a locking protrusion on the core pack and a through hole provided in the outer case to insert the locking protrusion. In this latch mechanism, the locking protrusion is inserted in the through hole in the outer case and projects outside the outer case. The locking protrusion projecting outward from a bottom case may increase an overall size of the power supply device. For power supply devices, since there is a demand for increased charge/discharge capacity and decreased external shape, a disadvantage of the locking protrusion projecting outward from the outer case can be solved by having the locking protrusion project inside the cooling duct provided in the outer case.

### CITATION LIST

### Patent Literature

PTL 1: International Publication No. 2012-132135

### SUMMARY

A cooling duct in which a locking protrusion projects turbulates a flow of cooling air blown into the duct, hindering uniform cooling of battery cells. It is an important issue for a core pack accommodating battery cells to uniformly cool the battery cells since unbalanced cooling of the battery cells results in unbalanced temperature of the battery cells. Since an increased temperature accelerates deterioration of the battery cells, a temperature rise of a specific battery cell deteriorates the specific battery cell earlier than other battery cells. A charge/discharge capacity of the battery cells decreases as the battery cell deteriorates, and thus a decrease in the charge/discharge capacity is a factor that determines a service life. A decrease in the charge/discharge capacity due to deterioration of the specific battery cell results in shortening a service life of the entire core pack. In the core pack accommodating the battery cells, the battery cells are connected in series to one another and set to an optimal output voltage for use. The battery cells connected in series to one another are charged and discharged with the same current, and thus a deteriorated battery cell with decreased charge/discharge capacity becomes overcharged or overdischarged. In the core pack of the battery, charging and discharging stops when one of the battery cells is fully charged or completely discharged. Therefore, when a specific battery cell is deteriorated and its charge/discharge capacity is decreased, charging of the core pack needs to be stopped when the deteriorated battery cell is fully charged, and discharging stops when the deteriorated battery cell is completely discharged. As a result, deterioration of a specific battery cell limits the charge/discharge capacity of the core pack, and shortens the service life of the core pack.

A power supply device according to an aspect of the present disclosure includes: a plurality of core packs; an outer case removably accommodates therein the plurality of core packs aligned horizontally in a plurality of rows; a latch mechanism latching the plurality of core packs at an insertion position of the outer case; and a cooling mechanism. Each core pack of the plurality of core packs includes a plurality of battery cells and a core pack case accommodating the plurality of battery cells therein. The cooling mechanism is configured to blow cooling air into the outer case to cool the plurality of battery cells in the each core pack. Each battery cell of the plurality of battery cells includes a battery cell case having one end surface as an electrode end surface and another end surface as a cooling end surface with a flat shape, the electrode end surface being provided with positive and negative electrodes. The each battery cell is accommodated in a vertical attitude in the core pack case such that the cooling end surface is directed toward a first surface of the core pack case, and the cooling end surface of the each battery cell is disposed in the core pack case to be thermally coupling to the first surface of the core pack case. The latch mechanism is disposed on a second surface of the core pack case different from the first surface. The outer case includes: a first cooling duct facing the first surface of the core pack case of the each core pack disposed at the insertion position; and a second cooling duct facing the second surface of the core pack case of the each core pack disposed at the insertion position. The cooling mechanism includes a blower fan configured to cool the each core pack by forcibly blowing cooling air to the first cooling duct and the second cooling duct. The latch mechanism includes: a locking protrusion configured to arrange the each core pack at the insertion position of the outer case and to prevent the each core pack from moving in a pull-out direction; and a knob connected to the locking protrusion and configured to move the locking protrusion to a latch position and a non-latch position, the latch position preventing the each core pack from moving in the pull-out direction, the non-latch position causing the each core pack to be movable in the pull-out direction. The outer case includes a locking plate configured to lock the core pack case at the insertion position. The locking plate has a locking opening provided therein, the locking protrusion being inserted into the locking opening to prevent the each core pack from moving in the pull-out direction. The latch mechanism configured to latch the each core pack at the insertion position such that a part of the latch mechanism is disposed in the second cooling duct to be configured to function as a turbulator for the cooling air.

The power supply device described above allows the core pack to be latched at the insertion position by the latch mechanism and uniformly cooling the battery cells in the core pack while achieving a compact external shape of the outer case.

### BRIEF DESCRIPTION OF DRAWINGS

FIG. 1 is a schematic perspective view of a power supply device according to Exemplary Embodiment 1 for illustrating a state that one core pack is pulled out from an outer case thereof.
FIG. 2 is a schematic perspective view of an end of the core pack shown in FIG. 1.
FIG. 3 is a schematic perspective view of an end of the outer case and the core pack shown in FIG. 1.
FIG. 4 is a schematic vertical sectional view of the power supply device.
FIG. 5 is a schematic horizontal sectional view of the power supply device.
FIG. 6 is a schematic view of an example of a locking plate of the power supply device.
FIG. 7 is a schematic view of another example of the locking plate.
FIG. 8 is a schematic view of still another example of the locking plate.
FIG. 9 is a schematic view of still another example of the locking plate.
FIG. 10 is a schematic view of still another example of the locking plate.
FIG. 11 is a schematic lateral sectional view of the locking plate shown in FIG. 10.
FIG. 12 is a schematic lateral sectional view of still another example of the locking plate.
FIG. 13 is a schematic perspective view of another example of a latch mechanism of the power supply device.
FIG. 14 is a schematic sectional view of another example of the latch mechanism.
FIG. 15 is a schematic sectional view of still another example of the latch mechanism.
FIG. 16 is a schematic sectional view of an example of a support of the power supply device.
FIG. 17 is a schematic sectional view of another example of the support.
FIG. 18 is a schematic sectional view of still another example of the support.
FIG. 19 is a schematic sectional view of still another example of the support.
FIG. 20 is a schematic sectional view of still another example of the support.
FIG. 21 is a schematic sectional view of still another example of the support.
FIG. 22 is a schematic cross-sectional view of another example of the power supply device.
FIG. 23 is a schematic cross-sectional view of still another example of the power supply device.

### DESCRIPTION OF EMBODIMENT

Aspects of the present disclosure may be specified by structures described below.

A power supply device according to an aspect of the present disclosure includes: a plurality of core packs; an outer case removably accommodates therein the plurality of core packs aligned horizontally in a plurality of rows; a latch mechanism latching the plurality of core packs at an insertion position of the outer case; and a cooling mechanism. Each core pack of the plurality of core packs includes a plurality of battery cells and a core pack case accommodating the plurality of battery cells therein. The cooling mechanism is configured to blow cooling air into the outer case to cool the plurality of battery cells in the each core pack. Each battery cell of the plurality of battery cells includes a battery cell case having one end surface as an electrode end surface and another end surface as a cooling end surface with a flat shape, the electrode end surface being provided with positive and negative electrodes. The each battery cell is accommodated in a vertical attitude in the core pack case such that the cooling end surface is directed toward a first surface of the core pack case, and the cooling end surface of the each battery cell is disposed in the core pack case to be thermally coupling to the first surface of the core pack case. The latch mechanism is disposed on a second surface of the core pack case different from the first surface. The outer case includes: a first cooling duct facing the first surface of the core pack case of the each core pack disposed at the insertion position; and a second cooling duct facing the second surface of the core pack case of the each core pack disposed at the insertion position. The cooling mechanism includes a blower fan configured to cool the each core pack by forcibly blowing cooling air to the first cooling duct and the second cooling duct. The latch mechanism includes: a locking protrusion configured to arrange the each core pack at the insertion position of the outer case and to prevent the each core pack from moving in a pull-out direction; and a knob connected to the locking protrusion and configured to move the locking protrusion to a latch position and a non-latch position, the latch position preventing the each core pack from moving in the pull-out direction, the non-latch position causing the each core pack to be movable in the pull-out direction. The outer case includes a locking plate configured to lock the core pack case at the insertion position. The locking plate has a locking opening provided therein, the locking protrusion being inserted into the locking opening to prevent the each core pack from moving in the pull-out direction. The latch mechanism configured to latch the each core pack at the insertion position such that a part of the latch mechanism is disposed in the second cooling duct to be configured to function as a turbulator for the cooling air.

The above power supply device efficiently cools the battery cells in the core packs, and prevents the outer case from becoming larger. More specifically, a part of the latch mechanism that locks the core pack at the insertion position projects into the second cooling duct to prevent the outer case from becoming larger. This structure allows the latch mechanism and the second cooling duct to be a common component. On the other hand, when the latch mechanism and the second cooling duct are a common component, the latch mechanism partially projecting into the second cooling duct functions as a turbulator configured to turbulate cooling air, causing a temperature difference on the second surfaces of the core pack cases. However, the above power supply device includes the first cooling duct in addition to the second cooling duct to reduce an influence of the turbulator. In particular, the influence of temperature unevenness caused by the turbulator can be reduced by the battery cells accommodated in the core pack case such that their cooling end surfaces are directed to the first surface of the core pack case where the first cooling duct is provided.

The above power supply device cools each of surfaces of the battery cell in the core pack by both the first cooling duct and the second cooling duct. In particular, the flat cooling end surface is thermally cou0pled to an inner side of the first surface of the core pack case. Thus, cooling air in the first cooling duct efficiently and uniformly cools the cooling end surfaces of the battery cells. It is important for the power supply device including the plurality of battery cells to keep the battery cells uniform. This is because the temperature unevenness among the battery cells affect a service life of the entire device. There is no turbulence of cooling air due to the locking protrusion in the first cooling duct that efficiently cools the battery cells, and thus the battery cells can be efficiently and uniformly cooled with cooling air. In addition, the second cooling duct efficiently cools the battery cells. Accordingly, the above power supply device solves a disadvantage of shortened service life of the entire device due to deterioration of a specific battery cell.

In a power supply device according to another aspect of the present disclosure, the locking plate may be disposed between the second cooling duct and the second surface of the core pack case. In this power supply device, the locking plate stably supports and locks the core pack at the insertion position. The locking plate made of a metal plate with high heat conductivity enhances the cooling efficiency of the second cooling duct, thereby efficiently cooling the battery cells.

In a power supply device according to still another aspect of the present disclosure, the locking plate may be a bottom plate of the outer case. In this power supply device, the bottom plate of the outer case also serves as the locking plate to reduce weight and cost, and the core pack is latched and locked to the insertion position, thereby efficiently cooling the battery cells.

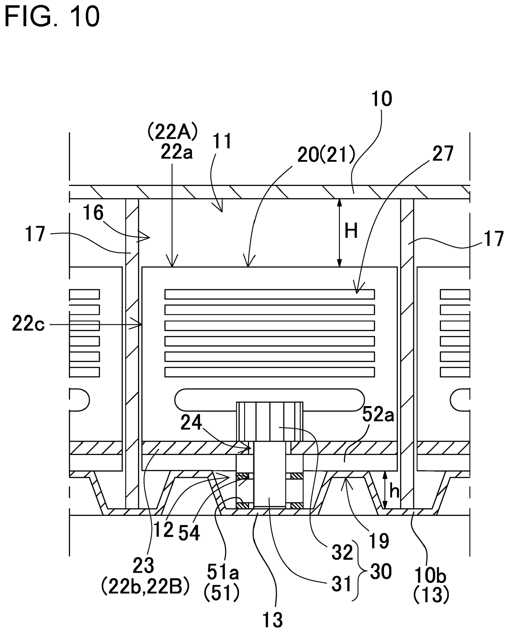

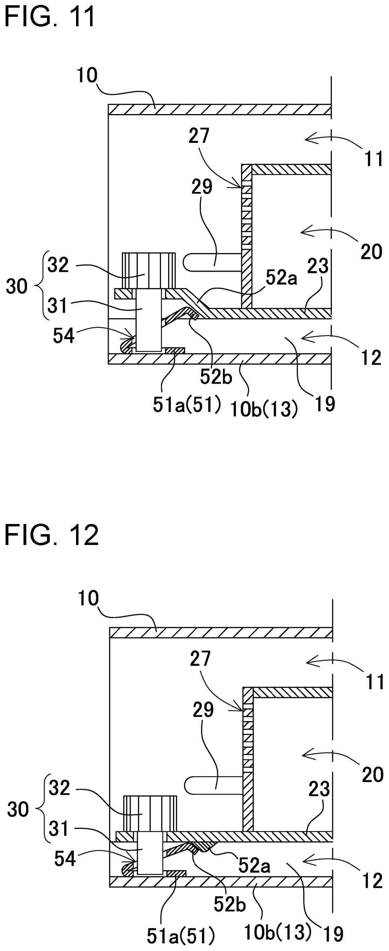

In a power supply device according to still another aspect of the present disclosure, the outer case may include a projection projecting from the bottom plate. The projection, the bottom plate of the outer case, and the second surface of the core pack case may demarcate the second cooling duct. As illustrated in, e.g., FIGS. 10 and 11, this power supply device forms and the second cooling duct demarcated by the projection. In addition, the projection reinforces the outer case to increase the strength, stably supporting the core packs.

In a power supply device according to still another aspect of the present disclosure, the bottom plate of the outer case and the projection may be formed unitarily with one another. This power supply device increases the strength of the outer case from the bottom plate, thereby reducing costs of components and assembly and weight.

In a power supply device according to still another aspect of the present disclosure, a latch stopper including the locking plate may be disposed in the second cooling duct. This power supply device reliably latches and locks the core pack at the insertion position.

In a power supply device according to still another aspect of the present disclosure, the locking protrusion may pass through both the second surface of the core pack case and the locking plate and project into the second cooling duct to function as the turbulator. This power supply device reliably latches and locks the core pack at the insertion position.

In a power supply device according to still another aspect of the present disclosure, the turbulator may include an elastic arm disposed in the second cooling duct, the elastic arm inserting and pushing up the locking protrusion through the locking opening in both the second surface of the core pack case and the locking plate. This power supply device reliably latches and locks the core pack at the insertion position with simple structure and configuration.

In a power supply device according to still another aspect of the present disclosure, the second surface of the core pack case may be opposite to the first surface of the core pack case. The each battery cell may be arranged such that the electrode end surface faces the second surface of the core pack case. The each core pack may have a wiring gap formed between the electrode end surface and a wall constituting the second surface of the core pack case. In this power supply device, the core pack efficiently cools the battery cells from both ends of the battery cells by both the first cooling duct and the second cooling duct provided in opposing positions on the outer case. In addition, since the first cooling duct and the second cooling duct are arranged in the opposing positions on the outer case and the latch mechanism is partially arranged in the second cooling duct, this power supply device latches the core pack at the insertion position while reducing an entire size of the outer case, in particular, a width in a vertical direction with respect to the first surface and the second surface.

Above-described power supply devices contribute to solving a disadvantage of shorter service life as a whole due to deterioration of a specific battery cell. The second cooling duct cools the second surface of the core pack case by partially turbulent cooling air. However, the second surface of the core pack case indirectly cools the electrode end surface via the wiring gap without directly cooling the electrode end surface. The cooling air in the second cooling duct cools the second surface of the core pack case with a temperature difference, but the temperature difference on the second surface is suppressed by the wiring gap when the electrode end surfaces of the battery cells are cooled. Thus, the electrode end surfaces of the battery cells can be cooled with less temperature difference. Furthermore, a metal lead plate is connected to positive and negative electrodes on the electrode end surface, and a conductive metal plate with high heat conductivity, i.e., a metal plate with high heat conductivity, is used for the lead plate. Therefore, the lead plate conducts thermal energy in a direction to reduce the temperature difference between adjacent battery cells, so that the battery cells can be cooled with less temperature difference. As described above, although the second cooling duct has a cooling effect of cooling the battery cells smaller than a cooling effect of the first cooling duct, the temperature difference on the second surface of the core pack case due to local turbulence of cooling air is suppressed by providing the wiring gap between the second surface and the electrode end surfaces. Further, the temperature difference is also suppressed by the heat conductivity of the lead plate connected to adjacent battery cells. As a result, the battery cells can be cooled while suppressing the temperature difference among the battery cells by both the first cooling duct and the second cooling duct.

In a power supply device according to still another aspect of the present disclosure, the core pack case may have a rectangular parallelepiped shape having a top plate constituting the first surface, a bottom plate constituting the second surface, and a pair of side plates connecting respective both sides of the top plate and the bottom plate to each other. This power supply device efficiently cools the battery cells with both the first cooling duct on the top plate side and the second cooling duct on the bottom plate side provided at opposing positions on the outer case when the top plate of the core pack case is regarded as the first surface and the bottom plate of the core pack case is regarded as the second surface. Further, the power supply device latches the core pack at the insertion position while reducing an entire size of the outer case, particularly a lateral width, by arranging the first cooling duct and the second cooling duct in the opposing positions on the outer case and partially arranging the latch mechanism in the second cooling duct.

In a power supply device according to still another aspect of the present disclosure, the each core pack may be stopped at the latch position with the locking protrusion inserted, by an own weight of the locking protrusion, into the locking opening provided in the bottom plate of the core pack case and the locking plate. This power supply device reliably latches and locks the core pack at the insertion position with a simple structure and configuration.

A power supply device according to still another aspect of the present disclosure may further include an elastic arm configured to move the locking protrusion. The elastic arm may include the knob. This power supply device reliably latches and locks the core pack at the insertion position with simple structure and configuration.

In a power supply device according to still another aspect of the present disclosure, the first surface of the core pack case may be an exposure surface exposed in the first cooling duct. This power supply device efficiently cools the first surface of the core pack case by cooling air in the first cooling duct.

In a power supply device according to still another aspect of the present disclosure, the locking plate may be a horizontal plate, and the each core pack may be removably placed on the horizontal plate. This power supply device facilitates insertion and pull-out of the core pack, and enables the horizontal plate to stably support and lock the core pack.

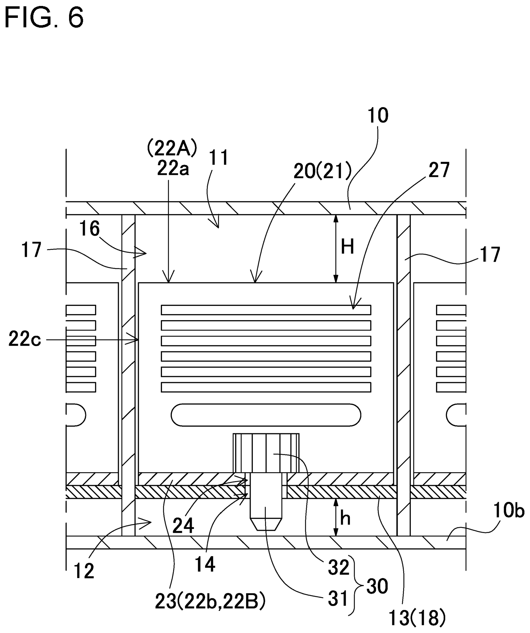

In a power supply device according to still another aspect of the present disclosure, the first cooling duct may have a width (H) equal to or greater than a width (h) of the second cooling duct. This power supply device enhances the cooling efficiency of the first cooling duct to increase contribution to cooling. As a result, the entire cooling efficiency can be enhanced. Widths (H, h) are widths of the first cooling duct and the second cooling duct in a shorter direction of cross-sectional openings (e.g., vertical width in FIG. 6).

A power supply device according to still another aspect of the present disclosure may employ lithium-ion secondary batteries for the battery cells.

A power supply device according to still another aspect of the present disclosure may employ cylindrical batteries for the battery cells.

Exemplary embodiments of the present disclosure will be described below with reference to the drawings. Note that the exemplary embodiments described below are illustrative for describing a technical concept of the present disclosure, and thus the present disclosure is not limited thereto. Still more, parts and materials described in the appended claims are not limited in any way to parts and materials described in the exemplary embodiments. Unless otherwise specified, dimensions, materials, shapes, and relative positions of components described in the exemplary embodiments are simply illustrative and not intended to restrict the scope of the present disclosure. The sizes and positional relationships indicated in the drawings may be exaggerated to clarify the description. In particular, the drawings illustrating the first and second cooling ducts and the latch mechanism are for description, and the scale of drawings, length, thickness, and the like of each part and material are not accurate.

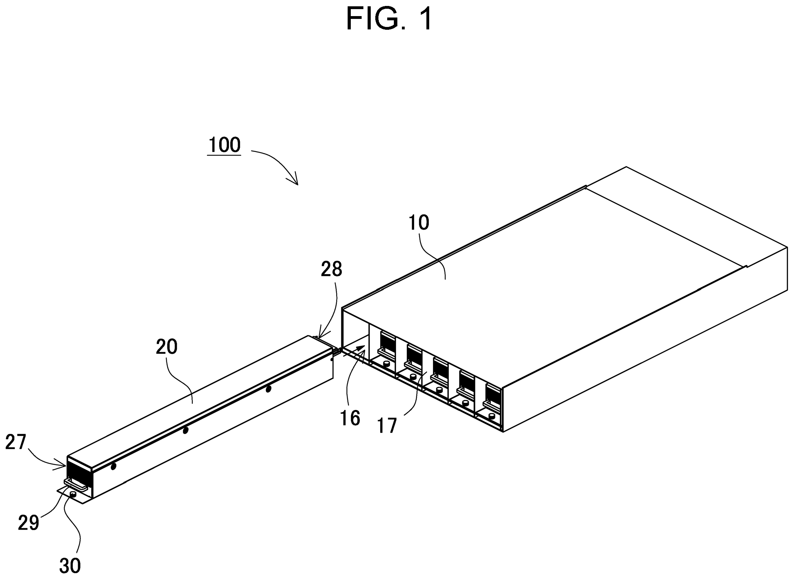

Still more, the top-bottom direction, directions including horizontal, perpendicular, bottom (bottom plate), top (top plate), side (side plate), upper, lower, and vertical, attitudes, positions, and positional relationships described are not intended to restrict the scope of the present disclosure, and are identified based on FIGS. 1 to 21. For example, since the power supply device can also be used upside down, the top-bottom direction of the power supply device used upside down will be reversed. Still more, the power supply device can also be used in a position rotated 90 degrees to the right or left.

Still more, the same names and reference marks denote the same or identical parts and materials, and their detailed description may be omitted as appropriate. Furthermore, each element of the present disclosure may be configured such that multiple elements are combined into a single component, allowing one component to serve as multiple elements, or conversely, a function of one component may be divided and implemented by multiple components.

Power supply device 100 of the present disclosure is applicable to a stationary power supply device, e.g., for backup power source of servers, power storage device for storing electric power obtained by solar power generation and the like for home, office, and factory use, or for power source for peak cutting during daytime. The exemplary embodiments of the present disclosure below describe an indoor power supply device for power storage.

### Exemplary Embodiment 1

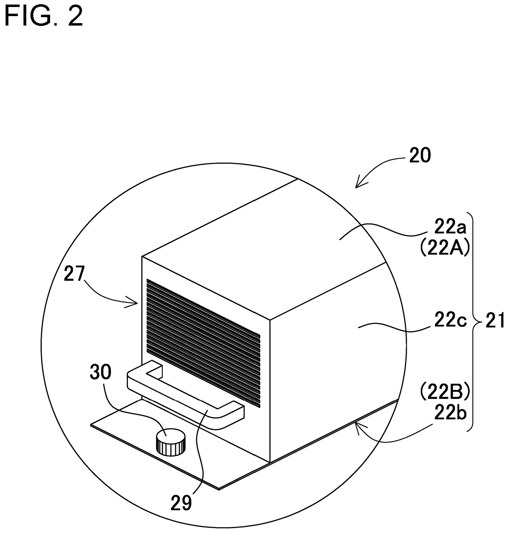

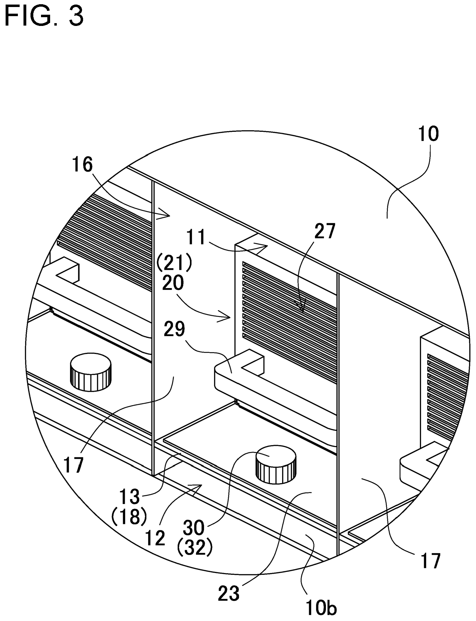

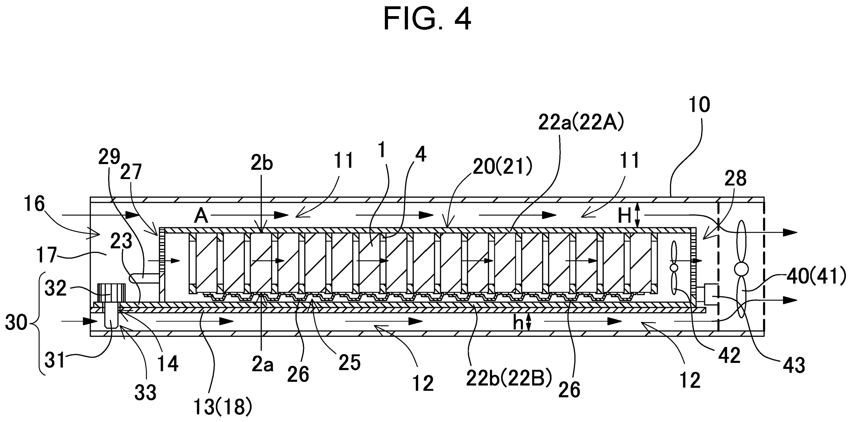

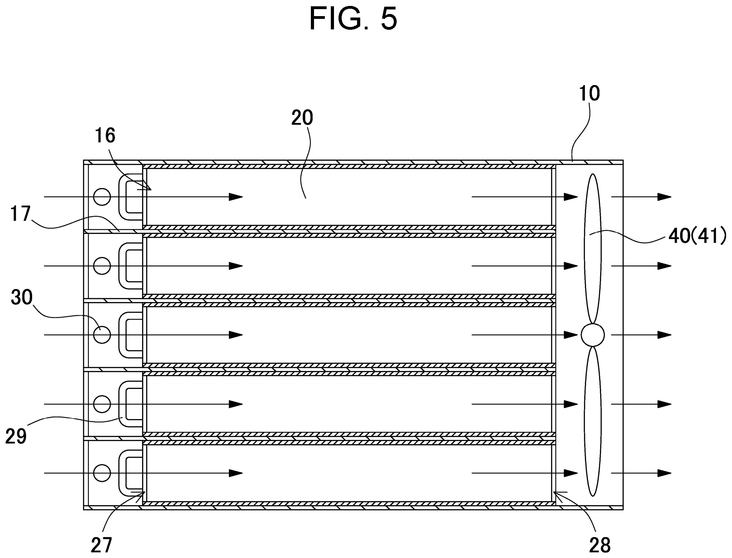

Power supply device 100 according to Exemplary Embodiment 1 of the present disclosure will be described with reference to FIGS. 1 to 5. FIG. 1 is a schematic perspective view of power supply device 100 according to Embodiment 1. FIG. 2 is a schematic perspective view of an end (rear end plate 27) of core pack 20 of a battery pulled out from outer case 10 shown in FIG. 1. FIG. 3 is a schematic perspective view of an end (rear end plate 27) of outer case 10 and core pack 20 at an insertion position shown in FIG. 1. FIG. 4 is a vertical sectional view of power supply device 100. FIG. 5 is a horizontal sectional view of power supply device 100 shown in FIG. 1. In power supply device 100 illustrated in these drawings, core packs 20 are removably accommodated in outer case 10. In each of core packs 20 of the battery, battery cells 1 are accommodated in a vertical attitude in core pack case 21. Outer case 10 removably accommodates therein core packs 20 aligned horizontally in plural rows. Power supply device 100 includes latch mechanism 30 configure to lock core pack 20 at the insertion position on outer case 10, and cooling mechanism 40 configured to blow cooling air to first cooling duct 11 and second cooling duct 12 provided between core pack 20 and outer case 20 to release thermal energy of battery cells 1.

### Core Pack 20 of Batteries

As illustrated in, e.g., FIG. 4, core pack 20 includes battery cells 1 in the vertical attitude accommodated in core pack case 21. Core pack case 21 has an elongated and thin rectangular parallelepiped shape extending in an insertion direction of core pack 20. Core pack case 21 includes top plate 22a, bottom plate 22b, and a pair of side plates 22c connecting both sides of top plate 22a to both sides of bottom plate 22b. Core pack case 21 is a tubular shape having a square or rectangular cross section. Core pack case 21 is made of a metal plate that can efficiently cool battery cells 1, and includes top plate 22a, bottom plate 22b, and side plates 22c connected unitarily to one another. Core pack 20 illustrated in FIGS. 4 and 6 has first surface 22A constituted by top plate 22a of core pack case 21, and second surface 22B constituted by bottom plate 22b. In FIG. 4, each of battery cells 1 built in the vertical attitude in core pack 20 has cooling end surface 2b at a top end disposed and thermally coupled onto an inner surface of top plate 22a (first surface 22A), and electrode end surface 2a at a bottom end faces an inner surface of bottom plate 22b (second surface 22B) with wiring gap 25 between electrode end surface 2a and bottom plate 22b. Battery cell 1 may have cooling end surface 2b contacting first surface 22A of core pack case 21 to be thermally coupled to first surface 22A and a thermally-conductive material may be sandwiched between cooling end surface 2b and first surface 22A of core pack case 21 while being thermally coupled to cooling end surface 2b and first surface 22A.

Core pack 20 releases thermal energy of battery cell 1 via core pack case 21 wo an outside of core pack 20. Battery cell 1 includes a battery cell case having one end surface that is electrode end surface 2a on which positive and negative electrodes are provided, and another end surface that is cooling end surface 2b with a flat shape. Battery cell 1 is arranged such that cooling end surface 2b is directed toward first surface 22A of core pack case 21. Cooling end surface 2b is thermally coupled to the inner surface of first surface 22A. Battery cells 1 thus arranged are accommodated in core pack case 21 in the same orientation such that cooling end surfaces 2b of all battery cells 1 are perpendicular to first surface 22A. Core pack 20 is configured to efficiently cool battery cells 1 inside by cooling first surface 22A of core pack case 21 with cooling air. First surface 22A of core pack case 21 is cooled by cooling air forcibly blown to first cooling duct 11 as described later. Battery cell 1 is efficiently cooled by cooling both cooling end surface 2b and electrode end surface 2a by first cooling duct 11 and second cooling duct 12. In core pack 20, cooling end surfaces 2b of battery cells 1 may be flush with one another to be thermally coupled to first surface 22A (lower surface of top late 22a shown in FIG. 4). Since wiring gap 25 is provided for connecting lead plate 26 to the positive and negative electrodes on electrode end surface 2a of battery cell 1, electrode end surface 2a may not be thermally coupled to second surface 22B (bottom plate 22b shown in FIG. 4) of core pack case 21. Therefore, core pack 20 efficiently cools battery cells 1 accommodated inside by forcibly cooling first surface 22A (top plate 22a in FIG. 4) of core pack case21. To efficiently cool battery cells 1, first cooling duct 11 for supplying cooling air is provided to face first surface 22A (top surface in FIG. 4) of each of core packs 20.

In core pack 20, lead plate 26 is disposed in wiring gap 25 provided between electrode end surface 2a and second surface 22B (bottom plate 22b shown in FIG. 4). Lead plate 26 includes lead plate 26 for positive electrode connected to the positive electrode and lead plate 26 for negative electrode connected to the negative electrode of electrode end surface 2a. Lead plates 26 are insulated from each other. Lead plates 26 are electrically connected to the electrodes of battery cell 1 by, e.g., spot welding and laser welding, so that battery cells 1 are connected in series or parallel to one another. Lead plate 26 for positive electrode and lead plate 26 for negative electrode connected to battery cell 1 are connected to connector 43 provided on a tip end surface (toward tip end plate 28 shown in FIG. 4) of core pack 20. Connector 43 on core pack 20 is connected to connector 43 provided on outer case 10 such that core pack 20 is inserted to the insertion position of outer case 10 to externally output electric power.

In core pack 20 illustrated in a sectional view of FIG. 4, rear end plate 27 closes a rear end of core pack case 21, and tip end plate 28 closes a tip end of core pack case 21. Rear end plate 27 and tip end plate 28 of core pack 20 illustrated in the drawing are made of metallic air-permeable porous plate, and inner fan 42 is arranged at the tip end of core pack 20. Core pack 20 is configured to cool battery cells 1 inside by blowing air into core pack case 21 by inner fan 42. In core pack 20, adjacent battery cells are disposed at fixed positions by battery holder 4 such that a space is provided between adjacent battery cells 1 to blow cooling air between the cells. In core pack 20, for example, a top end part and a bottom end part of battery cell 1 are held by battery holder 4 to provide a space for blowing cooling air at a center of battery cell 1. Power supply device 100 including inner fan 42 provided in core pack 20 is configured to blow cooling air into core pack case 21 to cool battery cells 1 while cooling core pack 20 with cooling mechanism 40, described later, by first cooling duct 11 and second cooling duct 12, thereby efficiently cooling battery cells 1. However, power supply device 100 of the present invention is configured to cool battery cells 1 inside, without providing inner fan 42, by cooling core pack 20 from outside with cooling mechanism 40 described later.

In core pack 20 in FIG. 3, grip 29 is provided on rear end plate 27. Core pack 20 has an advantage that the user can smoothly insert and pull out core pack 20 to and from outer case 10 by holding grip 29. In core pack 20 shown in FIG. 4, connector 43 is fixed onto tip end plate 28. In core pack 20, connector 43 of core pack 20 is connected to connector 43 of outer case 10 such that core pack 20 is pushed into the insertion position of outer case 10. Connector 43 connects adjacent core packs 20 to output electric power as the power supply device.

### Outer Case 10

Outer case 10 shown in FIG. 1 removably accommodates core packs 20 therein. Outer case 10 shown in the drawing includes a top plate, bottom plate 10b, and a pair of side plates connecting both sides of the top plate to both sides of bottom plate 10b. One end surface (end surface to the front in the drawing) of outer case 10 opens, and another end surface (end surface at the back) is closed with an air-permeable porous plate. Outer case 10 in the drawing has housing spaces 16 in which core packs 20 aligned horizontally in plural rows are removably accommodated. Outer case 10 includes partition wall 17 between adjacent housing spaces 16. In outer case 10, each of core packs 20 is inserted in a corresponding one of housing spaces 16, being independently removable from the corresponding one of housing spaces 16. A slide rail (not illustrated) for smoothly inserting and pulling out core pack 20 may be provided between core pack 20 and housing space 16. A cooling duct for supplying cooling air to above and below core pack 20 is provided in outer case 10 illustrated in FIGS. 3 and 4. The cooling duct includes first cooling duct 11 facing first surface 22A (top in FIG. 4) of core pack 20, and second cooling duct 12 facing second surface 22B side (bottom in FIG. 4) of core pack 20.

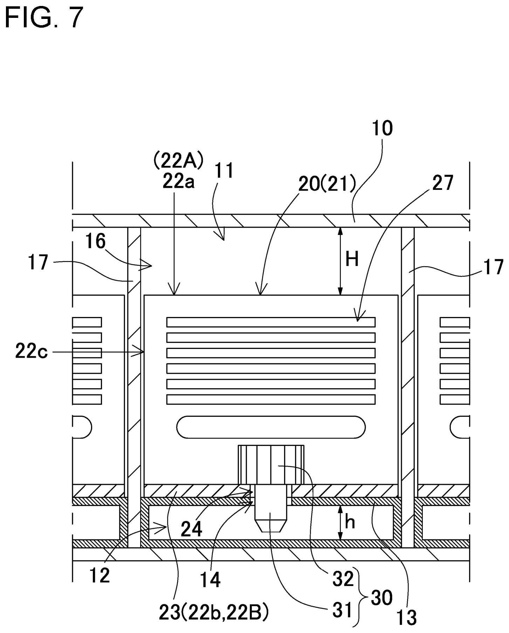

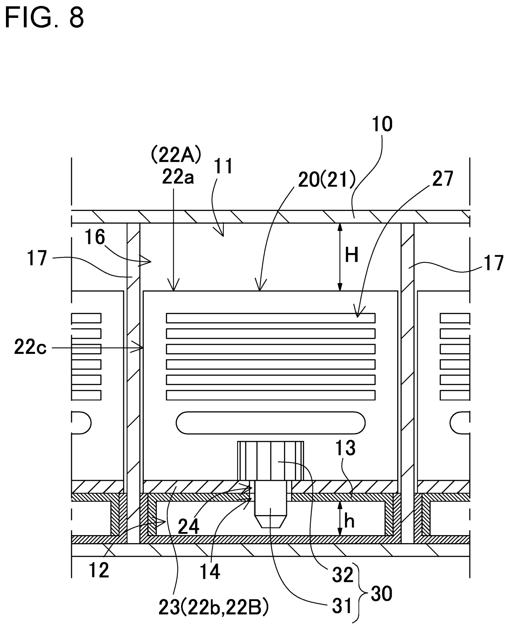

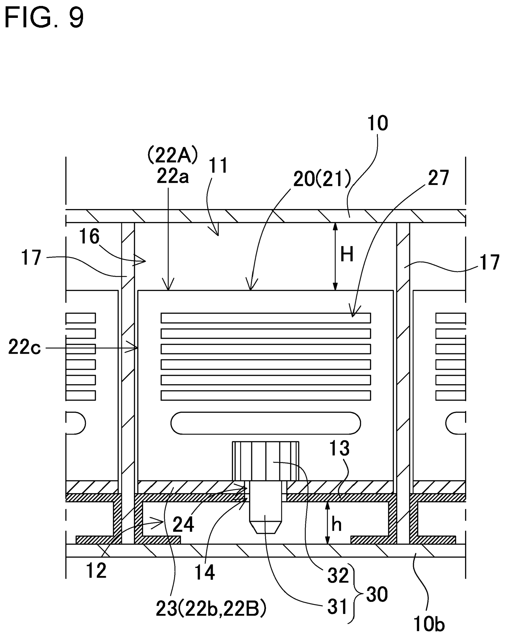

Locking plate 13 locks core pack 20 inserted to the insertion position. In sectional views in FIGS. 6 to 9, locking plate 13 is provided on the bottom of outer case 10, and second cooling duct 12 is provided below locking plate 13. Locking plate 13 of outer case 10 illustrated in the above drawings also serves as horizontal plate 18 on which core pack 20 is removably placed and slid. Locking plate 13 readily defines a width (h, height in the drawings) of second cooling duct 12. In outer case 10 in FIG. 6, both side edges of locking plate 13 (horizontal plate 18) are fixed and connected to side surfaces or partition walls 17 of outer case 10. In outer case 10 shown in FIG. 7, a metal tube with a rectangular cross section is placed on the bottom, and a top plate of this metal tube serves as locking plate 13. In outer case 10 in FIG. 8, a metal plate having a gutter shape with a U-shape cross section is placed upside down on the bottom, and second surface 22B (lower side of second surface 22B) serves as locking plate 13. In outer case 10 in FIG. 9, a metal plate with a gutter shape is placed on the bottom with opening facing downward to serve as locking plate 13. In outer cases 10 in FIGS. 7 to 9, unlike locking plate 13 in FIG. 6 in which the both side edges are fixed onto outer case 10 and partition walls 17, the metal tube or metal plate is inserted to the bottom of outer case 10 and locking plate 13 is arranged at the fixed position to provide predetermined second cooling duct 12.

Outer case 10 may include locking plate 13 inside, and the wall or inner surface of outer case 10 may serve as locking plate 13. For example, in FIG. 10, bottom plate 10b of outer case 10 serves as locking plate 13. As illustrated in sectional views in FIGS. 10 to 12, bottom plate 10b of outer case 10 may have one or more projections 19 projecting from bottom plate 10b. Projection 19 may be formed unitarily or separately with bottom plate 10b. For example, bottom plate 10b may be partially bent to form a projection or a projecting member may be provided on bottom plate 10b. Projection 19 reinforces bottom plate 10b and outer case 10, and supports core pack 20. In FIG. 10, two projections 19 are arranged separately to support core pack 20 placed stably thereon. In the case that core pack 20 is placed on projection 19, projection 19 has a width and thickness sufficient for supporting core pack 20 placed thereon. Outer case 10 having projection 19 directly cools bottom plate 22b of core pack case 21 by cooling air, thereby enhancing the cooling efficiency. This is because there is no need to arrange any substance between bottom plate 10b of outer case 10 and bottom plate 22b (second surface 22B) of core pack case 21, such as locking plate 13 serving as a partition plate to divide housing space 16 as illustrated in FIG. 6 or the metal tube with a rectangular cross section as illustrated in FIG. 7. Core pack 20 is removably placed on projection 19 contacting bottom plate 22b (second surface 22B) of core pack case 21 in the insertion position to define the height of second cooling duct 12. Projection 19 may be used in place of horizontal plate 18. Bottom plate 22b of core pack case 21 is configured to slide and move on projection 19 extending in an insertion-removal direction of core pack 20, so that core pack 20 can be inserted and removed.

Locking opening 14 may be provided in bottom plate 10b of outer case 10, or bottom plate 10b may include a member having locking opening 14 provided therein. For example, a plate having a tube, rib, protrusion, step, unevenness, or opening into which locking protrusion 31 can be inserted and locked may be provided. For example, bottom plate 10b of outer case 10 shown in FIGS. 10 to 12 includes latch stopper 51. Latch stopper 51 may be any member configured to lock and latch core pack 20, and a structure, configuration, and the like thereof are not specified. For example, core pack 20 is configured to be latched and locked by locking protrusion 31 inserted into locking opening 54 provided in latch stopper 51. Locking opening 54 allows a groove or protrusion of locking protrusion 31 to be locked. For example, latch stopper 51 may be bent metal fitting 51a configured to elastically deform. At insertion, core pack 20 is pushed in as core pack 20 presses down bent metal fitting 51a with a V-shape shown in FIGS. 11 and 12. At pulling out, bottom plate 22b (second surface 22B) of core pack 20 and bottom-plate extension 23 (end of bottom-plate extension 23 shown in FIG. 11) may be pressed down to pull out core pack 20 by contacting bent metal fitting 51a. Bottom plate 22b (second surface 22B), bottom-plate extension 23, and/or bent metal fitting 51a may have downward pushing guides 52a or 52b having a shape and structure to guide bent metal fitting 51a in a downward pushing direction by contacting, for example, a sloped, curved, bent, stepped, recessed, or protruded contact surface (FIG. 12). Outer case 10 including projection 19 may include separate latch stopper 51 on, e.g., bottom plate 10b, thus eliminating a member partitioning second cooling duct 12 and housing space 16 of core pack 20 (e.g., locking plate 13 for partition in FIG. 6).

### First Cooling Duct 11 and Second Cooling Duct 12

First cooling duct 11 is provided on first surface 22A (where cooling end surface 2b of battery cell 1 is arranged) of core pack 20, and second cooling duct 12 is provided on second surface 22B (where electrode end surface 2a of battery cell 1 is arranged) of core pack 20. First cooling duct 11 and second cooling duct 12 are configured to cool core pack 20 from both first surface 22A and second surface 22B. In power supply device 100 shown in FIGS. 1 to 4, top plate 22a (first surface 22A) on an upper surface of core pack 20 is exposed inside first cooling duct 11. Power supply device 10 having this exposed surface is configured to directly and efficiently cool top plate 22a (first surface 22A) of core pack case 21 by cooling air in first cooling duct 11. However, in power supply device 100, a heat conductive material with high heat conductivity may be disposed between first cooling duct 11 and top plate 22a (first surface 22A) of core pack case 21 without exposing top plate 22a (first surface 22A) of core pack case 21 in first cooling duct 11. Power supply device 100 with this structure is configured to cool core pack 20 via the heat conductive material by cooling air blown into first cooling duct.

Second cooling duct 12 faces second surface 22B different from first surface 22A of core pack case 21. Second cooling duct 12 illustrated in FIGS. 1 to 4 is provided on the bottom of housing space 16 below core pack 20. Outer case 10 shown in the drawings includes locking plate 13 facing second surface 22B, i.e., the bottom of housing space 16, and second cooling duct 12 is provided below locking plate 13. Locking plate 13 may be partially used as latch mechanism 30 configured to latch core pack 2 at the insertion position. In locking plate 13 in the drawings, core pack 20 is placed at the fixed position inside outer case 10, and second cooling duct 12 is provided on the bottom of housing space 16 below core pack 20 (second surface 22B) in a partitioned manner. Similarly to FIGS. 1 to 4, second cooling duct 12 faces second surface 22B (bottom in the drawing) of locking plate 13 in power supply device 100 illustrated in FIG. 6, and the width (h, vertical width in the drawing) of second cooling duct 12 is determined by the position of locking plate 13 (vertical position in the drawing). As illustrated in FIG. 6, outer case 10 determines the position (vertical position in the drawing) of core pack 20 by placing core pack 20 on locking plate 13, and determines a width (H, vertical width in the drawing) of first cooling duct 11 based on arrangement and vertical position of locking plate 13. This is because the arrangement and vertical position of core pack 20 determined by locking plate 13 determines the width and vertical width (H) of first cooling duct 11.

Outer case 10 including first cooling duct 11 and second cooling duct 12 provided therein is configured to supply cooling air to both cooling ducts to cool both surfaces (e.g., vertical end surfaces shown in FIG. 6) of core pack 20. Power supply device 100 preferably has the width (H, a vertical width shown in FIG. 6) of first cooling duct equal to or greater than the width (h, vertical width shown in FIG. 6) of second cooling duct 12 to efficiently and uniformly cool battery cell 1 by first cooling duct 11, thereby effectively cooling core pack 20 by first cooling duct 11. This is achievable because first surface 22A (top plate 22a shown in FIG. 6) of core pack 20 cooled by first cooling duct 11 is thermally coupled to cooling end surface 2b of battery cell 1. Therefore, in power supply device 100, first cooling duct 11 is preferably has the width (H, vertical width in FIG. 6) for efficiently cooling core pack 20, and second cooling duct 12 has the width (h, vertical width in FIG. 6) to allow latch mechanism 30 to latch removable core pack 20 at the insertion position.

First cooling duct 11 has a broad width (H, vertical width in FIG. 6) to reduce a pressure loss of cooling air and smoothly feed the cooling air. Accordingly, the width (H, vertical width in FIG. 6) of first cooling duct 11 is, for example, 3 mm or more, preferably 5 mm or more, and further preferably 7 mm or more. However, dimensions (vertical dimensions in FIG. 6) of outer case 10 increases as the width (H, vertical width in FIG. 6) of first cooling duct 11 increases. Therefore, the width (H, vertical width in FIG. 6) of first cooling duct 11 has an appropriate value with consideration to the dimensions (vertical dimensions in FIG. 6) of outer case 10.

To reduce the size of outer case 10, in other words, to prevent an adverse effect of enlarging the external shape due to locking protrusion 31 projecting outside outer case 10, a space for second cooling duct 12 is also used as a space into which locking protrusion 31 of latch mechanism 30 projects. Second cooling duct 12 is the space provided inside outer case 10. Locking protrusion 31 projecting into this space does not increase the outer shape that would otherwise occur due to locking protrusion 31 projecting outside outer case 10. However, locking protrusion 31 projecting into second cooling duct 12 constitutes turbulator 33 configured to turbulate flow of air blown to second cooling duct 12 to cool core pack 20. Cooling air in second cooling duct 12 turbulated by turbulator 33 hinders uniform cooling of second surface 22B (bottom plate 22b) of core pack 20. Core pack 20 having second surface 22B (bottom plate 22b) not uniformly cooled by cooling air may cause a temperature difference among battery cells 1 inside. The temperature difference among battery cells 1 has a disadvantage, as described above, of shortening the entire service life of core pack 20 due to accelerated deterioration of specific battery cell 1.

To solve the above disadvantage, first cooling duct 11 and second cooling duct 12 are provided on first surface 22A and second surface 22B (top and bottom surfaces in FIG. 6) of core pack 20 in power supply device 100, respectively. First cooling duct 11 is configured to cool first surface 22A (top plate 22a) of core pack case 21 thermally coupled to cooling end surfaces 2b of battery cells 1 to efficiently cool battery cells 1. Turbulator 33 is provided in second cooling duct 12, and second cooling duct 12 is configured to cool second surface 22B (bottom plate 22b) facing electrode end surfaces 2a of battery cells 1 across a space between cool second surface 22B and each of electrode end surfaces 2a.

Above power supply device 100 efficiently and uniformly cools cooling end surfaces 2b of battery cells 1 with cooling air in first cooling duct 11, and further cools electrode end surfaces 2a of battery cells 1 by cooling air in second cooling duct 12. However, electrode end surface 2a is cooled via second surface 22B (bottom plate 22b) of core pack case 21 via wiring gap 25. Cooling air in first cooling duct 11 is not turbulated by locking protrusion 31, and cools first surface 22A (top plate 22a) of core pack case 21, and uniformly and efficiently cools cooling end surface 2b of each battery cell 1 thermally coupled to first surface 22A (top plate 22a). Second cooling duct 12 cools second surface 22B (bottom plate 22b) of core pack case 21 with turbulated cooling air, but second surface 22B (bottom plate 22b) of core pack case 21 does not directly cool electrode end surface 2a. Electrode end surfaces 2a of battery cells 1 are cooled with less temperature difference by indirectly cooling electrode end surfaces 2a via wiring gap 25. As a result, both first cooling duct 11 and second cooling duct 12 release thermal energy of battery cells 1 to cool, but thermal energy absorbed and released from battery cells1 by first cooling duct 11 is significantly greater than thermal energy absorbed and released from battery cells 1 by second cooling duct 12.

As described above, cooling air in second cooling duct 12 cools second surface 22B (bottom plate 22b) of core pack case 21 with temperature difference. However, the temperature difference of second surface 22B (bottom plate 22b) is suppressed by wiring gap 25 at cooling electrode end surfaces 2a of battery cells 1, and thus cooling air in second cooling duct 12 cools electrode end surfaces 2a of battery cells 1 with less temperature difference. Electrode end surface 2a is connected to the positive and negative electrodes with metal lead plates 26. Lead plates 26 connect the electrode of battery cells 1 for connecting adjacent battery cells 1 in series or parallel to each other. Lead plate 26 is a conductive metal plate, i.e., metal plate with high thermal conductivity, and transmits thermal energy in a direction to reduce the temperature difference between connected battery cells 1, resulting in less temperature difference among battery cells 1. Cooling energy of second cooling duct 12 to cool battery cells 1 is smaller than that of first cooling duct 11, and wiring gap 25 is provided between second surface 22B (bottom plate 22b) and electrode end surface 2a to suppress the temperature difference of second surfaces 22B (bottom plates 22b) in core pack case 21 due to local turbulent cooling air caused by turbulator 33. The temperature difference is further suppressed also by thermal conduction of lead plate 26 connecting adjacent battery cells 1. As a result, the disadvantage of shortening the entire service life due to deterioration of specific battery cell 1 is solved by cooling battery cells 1 by both first cooling duct 11 and second cooling duct 12 while reducing the temperature difference among battery cells 1.

### Cooling Mechanism 40

Cooling mechanism 40 includes blower fan 41 configured to forcibly blow cooling air to first cooling duct 11 and second cooling duct 12. Blower fan 41, as illustrated in sectional views in FIGS. 4 and 5, forcibly blows cooling air to first cooling duct 11 and second cooling duct 12 provided in outer case 10 to cool battery cells 1 in core pack 20. Power supply device 100 illustrated in the drawings includes blower fan 41 on the tip end (tip end plate 28) side of core pack 20. Blower fan 41 in the drawings sucks and discharges cooling air in first cooing duct 11 and second cooling duct 12 to outside outer case 10 to cool battery cells 1 via core pack 20. Blower fan 41 is configured to cool battery cells 1 also by sucking air inside core pack cases 21. As illustrated in FIG. 4, power supply device 100 including inner fan 42 inside core pack case 21 is configured to efficiently cool battery cells 1 by forcibly blowing cooling air in the same direction by both inner fan 42 and blower fan 41.

### Latch Mechanism 30

Latch mechanism 30 is configured to prevent movement in the pull-out direction of core pack 20 arranged in the insertion position of outer case 10. Latch mechanism 30 includes locking protrusion 31 and knob 32. Locking protrusion 31 stops movement of core pack 20 in the pull-out direction of core pack 20 at a latch position. Knob 32 is configured to move locking protrusion 31 to a latch position preventing movement of core pack 20 in the pull-out direction of core pack 20 and to a non-latch position allowing core pack 20 to be movable in the pull-out direction. Latch mechanism 30 moves locking protrusion 31 to the latch position and the non-latch position (e.g., vertical movement in FIG. 4) to latch locking protrusion 31 at the latch position by inserting locking protrusion 31 into locking openings 24 and 14 in bottom plate 22b of core pack case 21 and locking plate 13. However, the present invention does not limit a mechanism for moving locking protrusion 31 to the latch position and the non-latch position (e.g., vertical movement), the shape of locking protrusion 31, and the like to the mechanism described below. The present invention does not limit any other mechanisms that can move (e.g., vertical movement) locking protrusion 31 or shapes of locking protrusion 31 to shapes described below. Locking protrusion 31 or locking plate 13 may have a stopper or locking part for preventing release of locking protrusion 31.

Latch mechanism 30 illustrated in FIGS. 1 to 4 includes locking protrusion 31 and knob 32. Locking protrusion 31 is configured to latch core pack 20 at the insertion position by moving in the vertical direction to connect, insert, and lock core pack 20 to bottom plate 22b of core pack case 21. Knob 32 is configured to move locking protrusion 31 in the vertical direction to the latch position and the non-latch position (movable position) of core pack 20. Locking protrusion 31 is inserted into locking opening 14 provided in locking plate 13 of outer case 10 to latch core pack 20 at the insertion position. Locking protrusion 31 illustrated in FIGS. 3 and 6 is configured to move in the vertical direction to be inserted into locking openings 24 and 14 provided in bottom plate 22b of core pack case 21 and locking plate 13, and latch core pack 20 at the insertion position. Locking protrusion 31 illustrated in FIGS. 3 and 6 includes a columnar part and a flange provided at an upper end of the columnar part. The columnar part is smaller than an inner diameter of locking openings 24 and 14. The flange is knob 32 allowing the user to hold the flange with a hand to vertically move locking protrusion 31. As illustrated in a sectional view in FIG. 4, knob 32 is larger than the inner diameter of locking opening 24 in bottom-plate extension 23, and is configured to contact a surface of bottom-plate extension 23 to determine the latch position of locking protrusion 31.

Locking protrusion 31 illustrated in FIGS. 2 and 3 is inserted into locking opening 24 provided in bottom plate 22b of core pack case 21 and locking opening 14 provided in locking plate 13 of outer case 10 to latch core pack 20 at the insertion position, as illustrated in sectional views in FIGS. 6 to 9. Locking protrusion 31 may have a shape, such as polygonal columnar, cylindrical, or square shape, other than the columnar shape.

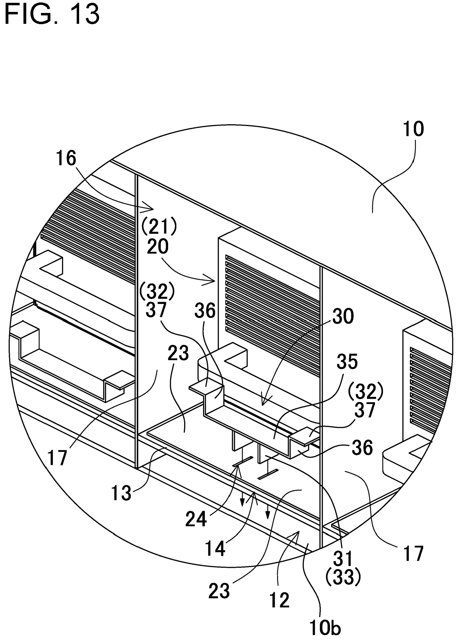

Locking protrusion 31 may have a plate shape as illustrated in FIGS. 13 to 15. Locking protrusions 31 with plate shapes may be arranged parallel to one another in plural rows. Locking protrusion 31 with a plate shape projecting into second cooling duct 12 and latching core pack 20 constitutes turbulator 33 configured to turbulate cooling air, but locking protrusion 31 with the plate shape arranged parallel to blowing direction A of cooling air reduces turbulence of the cooling air, and latches core pack 20. Locking protrusion 31 with the plate shape directed in the blowing direction reinforces a bending strength of core pack 20 against a force in the pull-out direction, thereby stably latching core pack 20. Latch mechanism 30 shown in FIG. 13 includes locking protrusions 31 with plate shape arranged in plural rows (two rows in the drawing) such that top ends of the protrusions are connected to flat plate 31. Locking protrusions 31 determines the latch position by contacting flat plate 35 and bottom plate 22b of core pack case 21. Knob 32 projecting upward from an end of flat plate 35 may be provided to unlatch by easily lifting up locking protrusion 31 at the latch position. Locking protrusions 31 of the above latch mechanism 30 pass through both bottom plate 22b of core pack case 21 and locking plate 13 and constitute turbulators 33 projecting to second cooling duct 12.

In FIG. 13, plural locking protrusions 31 arranged in parallel to one another are connected to knob 32 via flat plate 35. Knob 32 in the drawing includes raised part 36 and horizontal part 37. Raised part 36 is bent upward from both ends of flat plate 35 to which the locking protrusions projecting downward are connected. Horizontal part 37 is further horizontally bent from the end of raised part 36. Locking protrusion 31 is inserted, by its own weight, into locking opening 24 in bottom plate 22b of core pack case 21 and opening 14 in locking plate 13 to latch core pack 20. Locking protrusion 31 is released from the latched state when the user lifts horizontal part 37 (knob 32) upward to pulls locking protrusion 31 out of locking openings 24 and 14. Latch mechanism 30 latches core pack 20 by projecting locking protrusion 31 to second cooling duct 12, and thus locking protrusion 31 constitutes turbulator 33 configured to turbulate cooling air in second cooling duct 12.

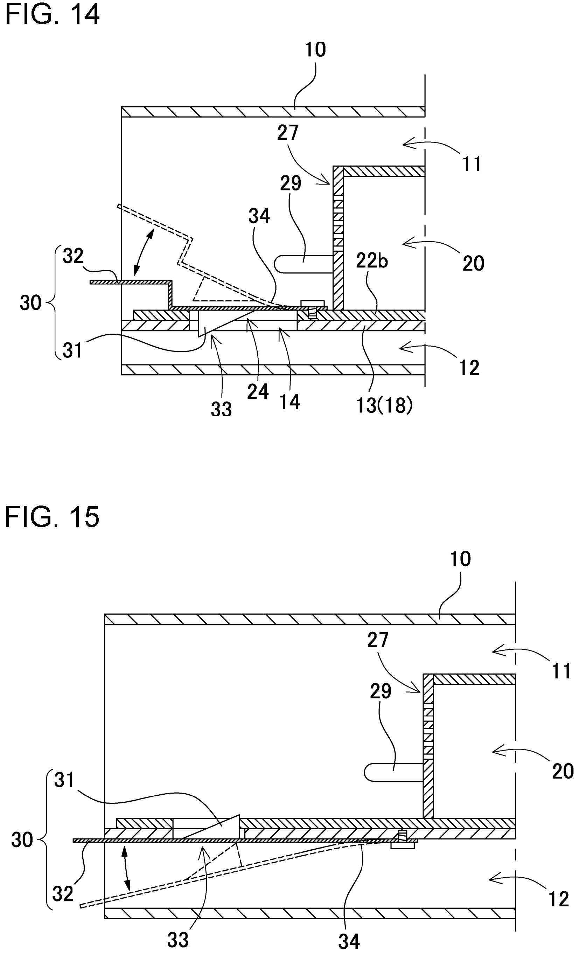

Latch mechanism 30 shown in FIG. 14 includes locking protrusion 31 connected to elastic arm 34. Elastic arm 34 is a metal plate configured to elastically deform. A tip end of elastic arm 34 is fixed onto a top surface of bottom plate 22b of core pack case 21. Locking protrusion 31 is fixed vertically to a bottom surface of a rear end or center part of elastic arm 34. Knob 32 is provided on the rear end of elastic arm 34. Elastic arm 34 extending horizontally while not deforming, and locking protrusion 31 is inserted into locking openings 24 and 14. When the user lifts knob 32 and causes elastic arm 34 to elastically deform, as indicated by the broken line, to pull locking protrusion 31 out of locking openings 24 and 14, thereby releasing the latched state. In latch mechanism 30, locking protrusion 31 constitutes turbulator 33 projecting to second cooling duct 12, and is configured to turbulate cooling air in second cooling duct 12.

Similarly to FIG. 14, locking protrusion 31 is connected to elastic arm 34 of latch mechanism 30 shown in FIG. 15, but elastic arm 34 is fixed to outer case 10 (locking plate 13 in the drawing) in latch mechanism 30. Elastic arm 34 is a metal plate configured to elastically deform, similarly to that in FIG. 14. A tip end side of elastic arm 34 is fixed onto the bottom surface of locking plate 13 of outer case 10. Locking protrusion 31 is fixed vertically to the top surface of the rear end or center part of elastic arm 34. Knob 32 is provided on the rear end of elastic arm 34. Knob 32 extends horizontally (e.g., FIG. 15), and a raised part or step (e.g., FIG. 14) may be provided. Elastic arm 34 is horizontal in the non-deformed state, and locking protrusion 31 is inserted into locking opening 24 provided in locking plate 13 and locking opening 14 provided in bottom plate 22b of core pack case 21. When the user pushes down knob 32 to elastically deform elastic arm 34, as indicated by the broken line, to pull locking protrusion 31 out of locking openings 24 and 14, thereby releasing the latched state. Latch mechanism 30 is disposed in second cooling duct 12. Elastic arm 34 that inserts locking protrusion 31 into both of locking openings 24 and 14 in bottom plate 22b of core pack case 21 and bottom plate 22b of core pack case 21 constitutes turbulator 33 configured to turbulate cooling air in second cooling duct 12. Elastic arm 34 extending horizontally constitutes turbulator 33 of latch mechanism 30, and thus, turbulence of cooling air in second cooling duct 12 can be reduced although latch mechanism 30 is partially disposed in second cooling duct 12.

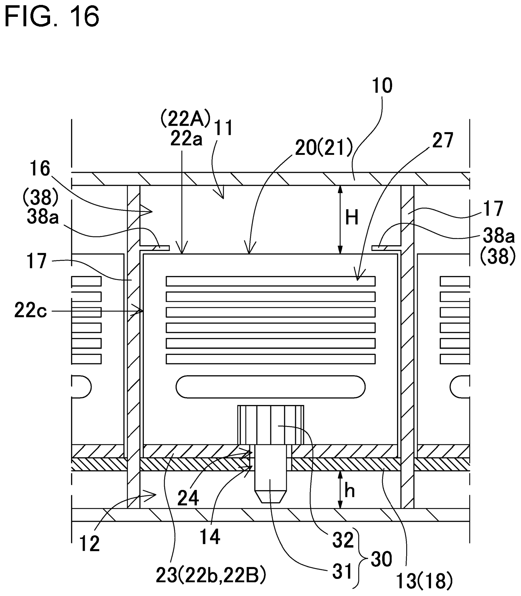

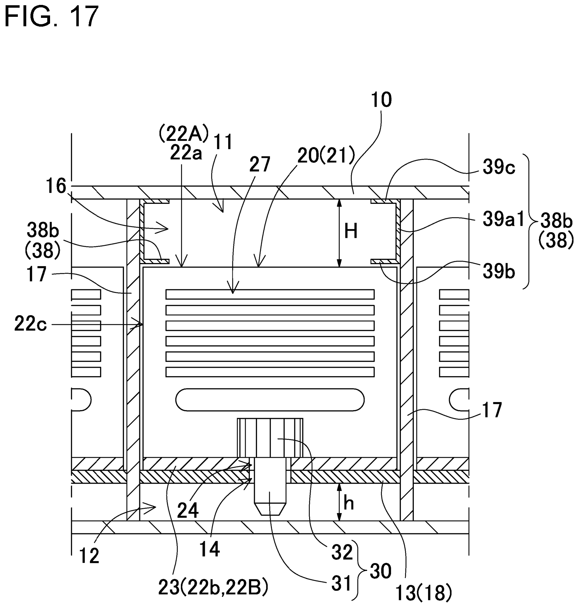

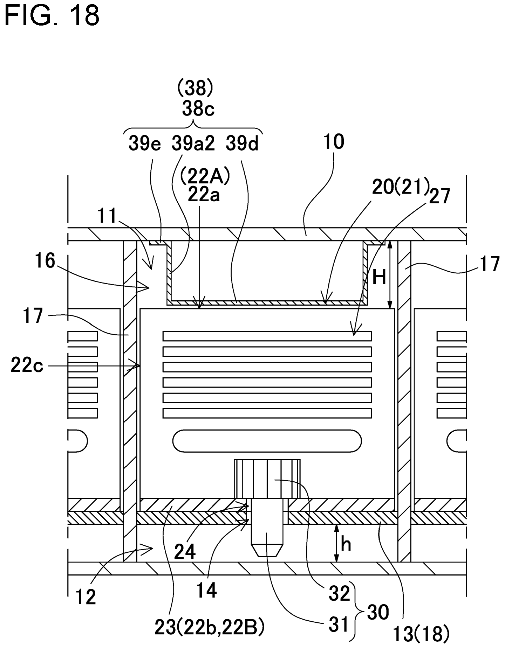

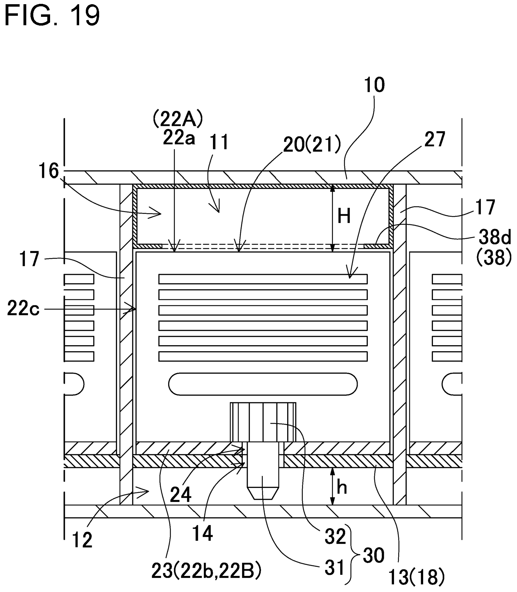

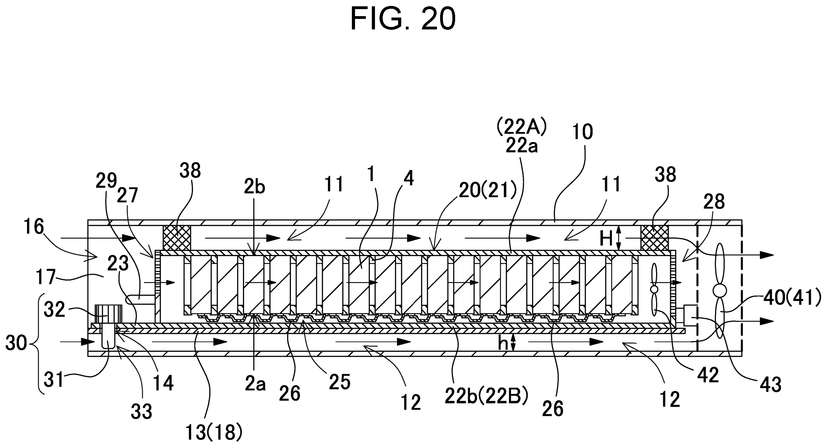

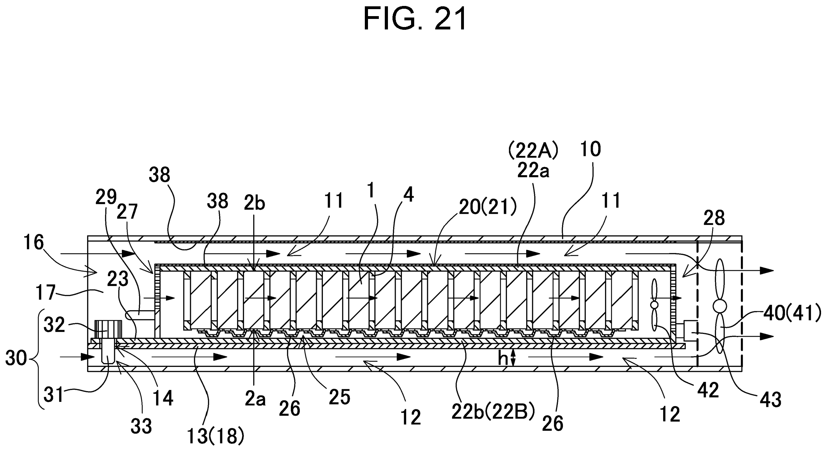

Power supply device 100 may further include one or more supports 38 that restrict movement or displacement (e.g., vertical displacement in FIG. 16) of core pack 20. Support 38 may be disposed in first cooling duct 11. Support 38 is configured to restrict displacement or movement of core pack 20 in a predetermined direction to prevent an unlocked state caused by locking protrusion 31 of latch mechanism 30 coming off from locking openings 24 and 14 due to displacement or movement of core pack 20 caused by, e.g., vibration or impact. Support 38 holds core pack 20 at a predetermined position and attitude, and restricts displacement of core pack 20, thereby reducing a connection load on connector 43. Support 38 may be connected and fixed to outer case 10 and/or core pack 20. The shape, size, structure, and arrangement position of support 38 are not specified but exemplified in FIGS. 16 to 21. Support 38a shown in FIG. 16 is a projection projecting inward from partition wall 17 on one side or both sides (FIG. 16) or from a side surface of outer case 10, and restricts vertical displacement of core pack 20. Support 38b may include, for example, a first part extending vertically and a second part extending horizontally. For example, as illustrated in FIGS. 17 and 18, support 38 contacts and tensions the top surface (inner surface of top plate of outer case 10) of first cooling duct 11 and top plate 22a of core pack case 21, thereby restricting the vertical displacement of core pack 20. For example, supports 38b shown in FIG. 17 made of metal plates having gutter shapes with square U-shaped cross sections opening in the horizontal directions are provided on partition wall 17 on both sides. In support 38b, first part 39a1 parallel with partition wall 17 is connected to second parts 39b and 39c extending inward from both upper and lower ends of first part 39a1. Supports 38c shown in FIG. 18 are made of metal plates having gutter shape with squared U-shape cross sections opening upward. Support 38c includes two first parts 39a2 extending vertically, second part 39d on a lower side (top plate 22a side) where two first parts 39a2 are connected at lower ends, and second part 39e on an upper side (top surface side of first cooling duct 11) connected to an upper end of each of first parts 39a2 extending leftward and rightward. Support 38d shown in FIG. 19 has a gutter shape (solid line) or a duct shape (dotted line). Support 38d shown in FIG. 19 may have a complete hollow duct shape by connecting a dotted line portion, or may have a squared U-shaped groove (solid line) with opening facing downward (top plate 22a side). Support 38 does not cover top plate 22a or may reduce an area covered. For example, supports 38 shown in FIG. 13, FIG. 14, solid line in FIG. 16, and FIG. 17 allows cooling air to directly cool top plate 22a, thereby enhancing the cooling efficiency of battery cells 1. Support 38 may be provided on the top surface of first cooling duct 11, top plate 22a, and on an inner circumference of first cooling duct 11 with a plate parallel to blowing direction A of cooling air. Support 38 may have a small width and thickness preventing upward displacement of core pack 20. This configuration minimizes turbulence of blowing cooling air and generation of turbulent flow. One or more supports 38 may be provided in part or entire first cooling duct 11. For example, support 38 shown in FIG. 20 is provided on top end plate 28 and rear end plate 27 of core pack 20. Support 38 shown in FIG. 21 is provided from tip end plate 28 to rear end plate 27 of core pack 20.

### Other Exemplary Embodiment

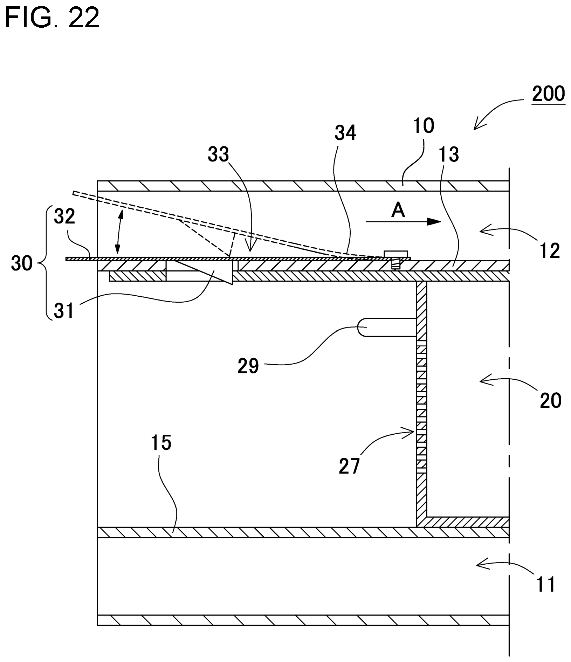

Power supply device illustrated in FIGS. 1 to 21 may be used upside down or used in a position rotated 90 degrees to the right or left. Power supply device 200 used upside down in FIG. 22 includes first cooling duct 11 disposed below core pack 20, and second cooling duct 12 disposed above core pack 20. Power supply device 200 used in this state, as illustrated in FIG. 22, includes positioning plate 15 arranged in the fixed position to place bottom plate 22b (second surface 22B) of core pack 20, so that core pack 20 can be disposed at the fixed position inside outer case 10. In power supply device 200, core pack 20 is placed on positioning plate 15 to be inserted into and pulled out from outer case 10, and first cooling duct 11 can be provided between core pack 20 and outer case 10. Core pack 20 makes surface contact with positioning plate 15 by the own weight of core pack 20, and thus, core pack 20 is thermally coupled. Accordingly, cooling air in first cooling duct 11 efficiently cools core pack 20 via positioning plate 15.

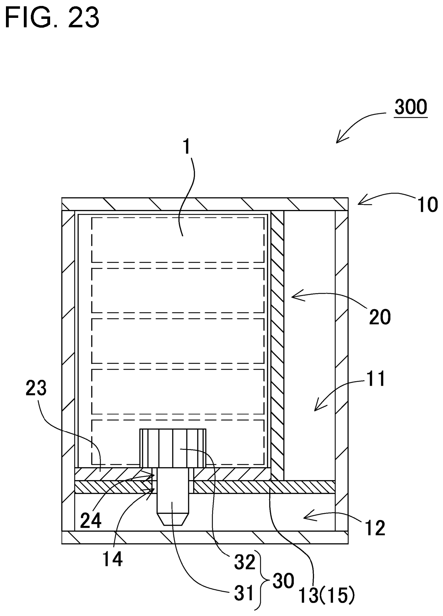

Power supply device 100 in FIGS. 1 to 21 can be used upside down or can also be used in a position rotated 90 degrees to the right or left. In addition, arrangement of first cooling duct 11 and second cooling duct 12 can be changed. For example, power supply device 300, as illustrated in FIG. 23, is used in a position rotated 90 degrees to the right, and includes first cooling duct 11 arranged to the right (first surface 22A) of core pack 20, and second cooling duct 12 arranged at the bottom (second surface 22B) of core pack 20. In power supply device 300 shown in FIG. 23, battery cells 1 are accommodated in the horizontal attitude in core pack case 21 of core pack 20. Power supply device 300 in the drawing includes first cooling duct 11 arranged in a vertically elongated cross section on the right side of core pack 20 that is cooling end surface 2b on a heat release surface of battery cell 1 with current collection on one side. Latch mechanism 30 can be provided on a side other than first cooling duct 11, e.g., bottom (FIG. 23) or top (not illustrated) of core pack 20. In FIG. 23, latch mechanism 30 is provided in second cooling duct 12 arranged below core pack 20. Power supply device 300 shown in FIG. 23 includes positioning plate 15 disposed at the fixed position to place bottom plate 22b of core pack 20, so that core pack 20 can be disposed at the fixed position inside outer case 10. Positioning plate 15 serves as locking plate 13. In power supply device 300, core pack 20 is placed on positioning plate 15 to be inserted into and pulled out from outer case 10, and locked at the insertion position. Core pack 20 makes surface contact with positioning plate 15 by the own weight of core pack 20, and thus core pack 20 thermally coupled. Accordingly, cooling air in second cooling duct 12 below positioning plate 15 can efficiently cool core pack 20 via positioning plate 15.

### INDUSTRIAL APPLICABILITY

The present disclosure is applicable to the power supply device capable of latching the core pack to the insertion position by the latch mechanism and uniformly cooling the battery cells in the core pack while achieving a compact external shape of the outer case.

### REFERENCE MARKS IN THE DRAWINGS

- 100, 200, 300: power supply device
- 1: battery cell
- 2a: electrode end surface
- 2b: cooling end surface
- 4: battery holder
- 10: outer case
- 10b: bottom plate
- 11: first cooling duct
- 12: second cooling duct
- 13: locking plate
- 14: locking opening
- 15: positioning plate
- 16: housing space
- 17: partition wall
- 18: horizontal plate
- 19: projection
- 20: (battery) core pack
- 21: core pack case
- 22A: first surface
- 22B: second surface
- 22a: top plate
- 22b: bottom plate
- 22c: side plate
- 23: bottom-plate extension
- 24: locking opening
- 25: wiring gap
- 26: lead plate
- 27: rear end plate
- 28: tip end plate
- 29: grip
- 30: latch mechanism
- 31: locking protrusion
- 32: knob
- 33: turbulator
- 34: elastic arm
- 35: flat plate
- 36: raised part
- 37: horizontal part
- 38, 38a, 38b, 38c, 38d: support
- 39a1, 39a2: first part
- 39b, 39c, 39d, 39e: second part
- 40: cooling mechanism
- 41: blower fan
- 42: inner fan
- 43: connector
- 51: latch stopper
- 51a: bent metal fitting
- 52a, 52b: downward pushing guide
- 54: locking opening

## Claims

1. A power supply device comprising:
a plurality of core packs;
an outer case removably accommodates therein the plurality of core packs aligned horizontally in a plurality of rows;
a latch mechanism latching the plurality of core packs at an insertion position of the outer case; and
a cooling mechanism, wherein
each core pack of the plurality of core packs includes a plurality of battery cells and a core pack case accommodating the plurality of battery cells therein,
the cooling mechanism is configured to blow cooling air into the outer case to cool the plurality of battery cells in the each core pack,
each battery cell of the plurality of battery cells includes a battery cell case having one end surface as an electrode end surface and another end surface as a cooling end surface with a flat shape, the electrode end surface being provided with positive and negative electrodes,
the each battery cell is accommodated in a vertical attitude in the core pack case such that the cooling end surface is directed toward a first surface of the core pack case, and the cooling end surface of the each battery cell is disposed in the core pack case to be thermally coupling to the first surface of the core pack case,
the latch mechanism is disposed on a second surface of the core pack case different from the first surface,
the outer case includes:
a first cooling duct facing the first surface of the core pack case of the each core pack disposed at the insertion position; and
a second cooling duct facing the second surface of the core pack case of the each core pack disposed at the insertion position,
the cooling mechanism includes a blower fan configured to cool the each core pack by forcibly blowing cooling air to the first cooling duct and the second cooling duct,
the latch mechanism includes:
a locking protrusion configured to arrange the each core pack at the insertion position of the outer case and to prevent the each core pack from moving in a pull-out direction; and
a knob connected to the locking protrusion and configured to move the locking protrusion to a latch position and a non-latch position, the latch position preventing the each core pack from moving in the pull-out direction, the non-latch position causing the each core pack to be movable in the pull-out direction,
the outer case includes a locking plate configured to lock the core pack case at the insertion position,
the locking plate has a locking opening provided therein, the locking protrusion being inserted into the locking opening to prevent the each core pack from moving in the pull-out direction, and
the latch mechanism configured to latch the each core pack at the insertion position such that a part of the latch mechanism is disposed in the second cooling duct to be configured to function as a turbulator for the cooling air.

2. The power supply device according to claim 1, wherein the locking plate is disposed between the second cooling duct and the second surface of the core pack case.

3. The power supply device according to claim 1, wherein the locking plate is a bottom plate of the outer case.

4. The power supply device according to claim 3, wherein
the outer case includes a projection projecting from the bottom plate, and
the projection, the bottom plate of the outer case, and the second surface of the core pack case demarcate the second cooling duct.

5. The power supply device according to claim 4, wherein the bottom plate of the outer case and the projection are formed unitarily with one another.

6. The power supply device according to any one of claims 1 to 5, wherein a latch stopper including the locking plate is disposed in the second cooling duct.

7. The power supply device according to claim 1, wherein the locking protrusion passes through both the second surface of the core pack case and the locking plate, and projects into the second cooling duct to function as the turbulator.

8. The power supply device according to claim 1, wherein the turbulator includes an elastic arm disposed in the second cooling duct, the elastic arm inserting and pushing up the locking protrusion through the locking opening provided in both the second surface of the core pack case and the locking plate.

9. The power supply device according to claim 1, wherein
the second surface of the core pack case is opposite to the first surface of the core pack case,
the each battery cell is arranged such that the electrode end surface faces the second surface of the core pack case, and
the each core pack has a wiring gap formed between the electrode end surface and a wall constituting the second surface of the core pack case.

10. The power supply device according to claim 9, wherein the core pack case has a rectangular parallelepiped shape having a top plate constituting the first surface, a bottom plate constituting the second surface, and a pair of side plates connecting respective both sides of the top plate and the bottom plate to each other.

11. The power supply device according to claim 10, wherein the each core pack is stopped at the latch position with the locking protrusion inserted, by an own weight of the locking protrusion, into the locking opening provided in the bottom plate of the core pack case and the locking plate.

12. The power supply device according to claim 1, further comprising an elastic arm configured to move the locking protrusion, wherein the elastic arm includes the knob.

13. The power supply device according to claim 1, wherein the first surface of the core pack case is an exposure surface exposed in the first cooling duct.

14. The power supply device according to claim 1, wherein the locking plate is a horizontal plate, and the each core pack is removably placed on the horizontal plate.

15. The power supply device according to claim 1, wherein the first cooling duct has a width (H) equal to or greater than a width (h) of the second cooling duct.

16. The power supply device according to claim 1, wherein the each battery cell is a lithium-ion secondary battery.

17. The power supply device according to claim 1, wherein the each battery cell is a cylindrical battery.
